# DEMANDE DE BREVET EUROPEEN

(11) **EP 2 942 244 A1**
(43) Date de publication de la demande: **11.11.2015**
(21) Numéro de dépôt: 14167130.5
(22) Date de dépôt: 06.05.2014
(51) Int. Cl.: B60R 25/102, B60R 25/24

(54) **Dispositif, système et procédé de suivi et de repérage de véhicule**

(71) Demandeur: Nigiloc, 40100 Dax (FR)
(72) Inventeur: Wilhelm, Gilbert, 40100 DAX (FR)
(74) Mandataire: Ipside

(57) **Abrégé**

L'objet de l'invention est un dispositif de suivi et de repérage (10) comportant un bloc microcontrôleur basse consommation (100) et un module de réception de géo-localisation (110), qui comprend un module d'émission radio numérique bas débit (130) de portée moyenne typiquement entre 10 à 50 km, un module accéléromètre (140), un module d'émission réception pour liaison radio numérique de proximité (120) lesdits modules étant reliés au et pilotés par le bloc microcontrôleur.

## Description

### Domaine de l'invention

La présente invention concerne un système de suivi et de repérage de véhicules, notamment de véhicules deux-roues, un dispositif de ce système et un procédé de suivi et de repérage au moyen des ces dispositif et système. L'invention concerne également un véhicule équipé d'un dispositif tel système de suivi et de repérage.

L'invention s'applique aux systèmes de suivi et de repérage à dispositif électronique de localisation par satellites. Un tel dispositif utilise par exemple les données du système GPS ("Global Positioning System" en anglais).

### Arrière plan technologique

Le document GB2492742 décrit un système de localisation par satellites d'une bicyclette qui comprend un dispositif électronique de suivi pourvu d'un boîtier installé à l'intérieur d'un tube constitutif de la bicyclette, tel que le tube de direction de la fourche. Le dispositif comprend une antenne qui émerge hors du tube et qui est associée à un modem GSM et un module GPS. Le dispositif comprend en outre un microcontrôleur, le modem, le module GPS, le microcontrôleur et les composants électroniques associés sont disposés sur un circuit imprimé. Le modem GSM, le module GPS et le microcontrôleur forment conjointement un traqueur GPS.

Le traqueur sur réception d'une ou plusieurs commandes d'un utilisateur par l'intermédiaire du modem GSM, détermine sa localisation par l'intermédiaire du module GPS et reporte cette localisation à l'utilisateur au travers de la liaison modem.

La liaison par modem GSM est coûteuse et consommatrice. En outre elle nécessite une liaison téléphonique bidirectionnelle et une antenne difficiles à mettre en oeuvre et nécessitant un dialogue avec une machine distante.

### Brève description de l'invention

La présente invention a notamment pour but de perfectionner un tel dispositif et de le rendre plus fiable et plus simple d'utilisation en limitant au maximum les manipulations nécessaires par l'utilisateur.

Le système de la présente invention est un système de suivi et de repérage comportant un dispositif électronique de suivi et de repérage destiné à être inséré à l'intérieur d'un élément d'un véhicule tel qu'un véhicule deux roues en première application. Le dispositif électronique comprend un module de géo-localisation, un dispositif détecteur de mouvements ou accéléromètre, un dispositif émetteur/récepteur radio numérique courte distance (de l'ordre de la dizaine de mètres) et un dispositif émetteur radio numérique longue distance (de 10 à 50 km).

Le dispositif de l'invention est plus particulièrement dimensionné pour s'appliquer aux véhicules à deux roues motorisées ou non motorisées, du type bicyclettes, cyclomoteurs, scooters, motos ou analogues mais peut s'appliquer à d'autres véhicules.

Par dispositif de géo-localisation, on entend un dispositif électronique qui coopère avec un système de géo-localisation par satellites, GPS, Gallileo ou équivalent.

Plus précisément la présente invention propose un dispositif de suivi et de repérage comportant un bloc microcontrôleur basse consommation et un module de réception de géo-localisation et qui comprend un module d'émission radio numérique bas débit de portée moyenne typiquement jusqu'à 10 à 50 km, un module accéléromètre, un module d'émission réception pour liaison radio numérique de proximité lesdits modules étant reliés au et pilotés par le bloc microcontrôleur.

Avantageusement, le module d'émission-réception pour liaison radio numérique de proximité est réalisé selon le standard Bluetooth.

Plus particulièrement, le module d'émission bas débit est adapté à une communication bas débit (100 bits/s) à bande ultra étroite (100 Hz).

Le module d'émission bas débit est avantageusement un module d'émission réalisé selon le standard du réseau bas débit déployé par la société Sigfox.

Le module d'émission réception de proximité est préférablement adapté à communiquer avec un appareil électronique tel qu'un téléphone portable.

Le dispositif comporte avantageusement une fonction de mise en veille du microcontrôleur et des modules et le câblage de l'accéléromètre avec le microcontrôleur est conçu pour qu'une détection de mouvement par l'accéléromètre génère un signal de réveil pour le microcontrôleur qui rentre alors dans un programme de surveillance.

Le dispositif comporte avantageusement des moyens de stockage de codes et/ou adresses MAC de un ou plusieurs appareils. Le dispositif est aussi à même de stocker un identifiant du module d'émission bas débit.

L'invention propose en outre un système de suivi et de repérage d'un véhicule comportant un dispositif de suivi et de repérage tel que défini ci-dessus et comportant en outre un logiciel d'appairage et de dialogue avec ledit dispositif sur un appareil portable.

Le système comporte préférablement au moins un récepteur bas débit relié avec un serveur pourvu d'une base de données utilisateur et de moyens de dialogue avec une application de localisation hébergée sur ledit appareil portable ou un autre appareil.

L'invention prévoit un procédé de mise en oeuvre d'un dispositif tel que défini ci-dessus comportant une étape de sortie de veille du dispositif sur détection de mouvement, un lancement d'une liaison Bluetooth et une recherche d'un appareil référencé.

Avantageusement, le procédé comporte une étape de détection et de reconnaissance de l'appareil par dialogue avec l'appareil et une étape de retour dans l'état de veille sur reconnaissance de la présence de l'appareil. L'étape de détection et de reconnaissance de l'appareil comporte avantageusement la prise en compte de l'adresse MAC de l'appareil.

Le dialogue peut être limité au dialogue de reconnaissance d'adresse MAC du protocole Bluetooth ou comporter des étapes plus spécifiques telle que la transmission d'un code de reconnaissance crypté ou non.

Le procédé comporte avantageusement, sur détection de l'absence d'un appareil référencé et après une temporisation donnée, une mise en route du récepteur de géo-localisation.

Le procédé comporte préférablement un test de mouvement du véhicule et, tant que le véhicule est en mouvement, une ou plusieurs étapes de relevé de position du véhicule au moyen du module GPS et une ou plusieurs étapes d'émission des relevés de position encodés selon le protocole du réseau bas débit unidirectionnel par le module d'émission SF.

Le procédé comporte préférablement une ou plusieurs étapes de réception des relevés de positions sur des antennes réparties sur le territoire selon un maillage donné, une ou plusieurs étapes de transmission desdites données à un serveur et une ou plusieurs étape de transmission des relevés depuis le serveur distant vers un terminal utilisateur.

Selon un mode de réalisation avantageux, le procédé comporte une étape de mise en route du dispositif de suivi et de repérage comportant un passage en mode configuration du dispositif comportant une activation de sa fonction Bluetooth en mode esclave, la connexion de l'appareil avec une application de configuration dans un appareil tel qu'un ordinateur du vendeur de véhicules et la configuration de base dudit dispositif par l'application de configuration.

Selon un mode de réalisation avantageux, le procédé comporte une étape de personnalisation du dispositif comportant une étape d'entrée, dans la base de données d'un prestataire gérant le dispositif, des données d'un client, une étape de paramétrage du dispositif pour reconnaitre un terminal du client et initialiser un code secret du dispositif.

### Brève description des dessins

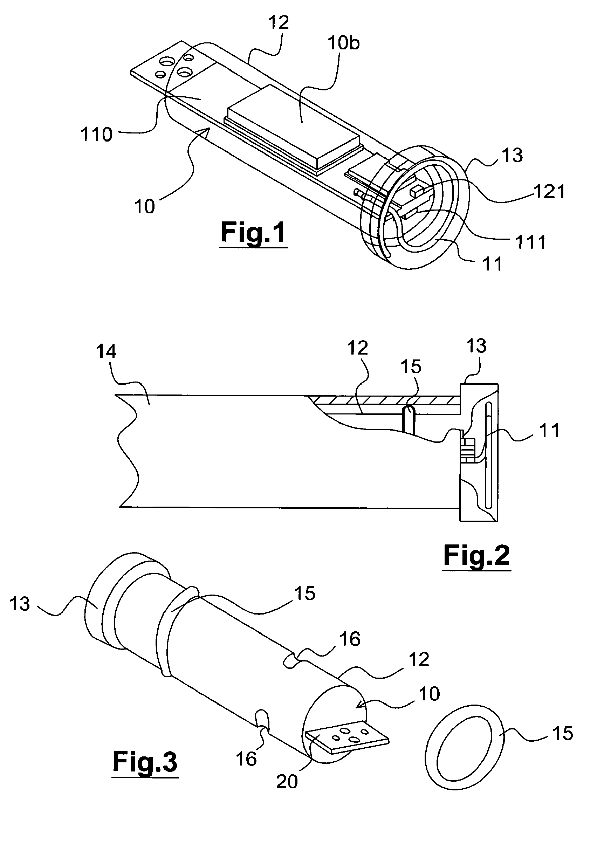

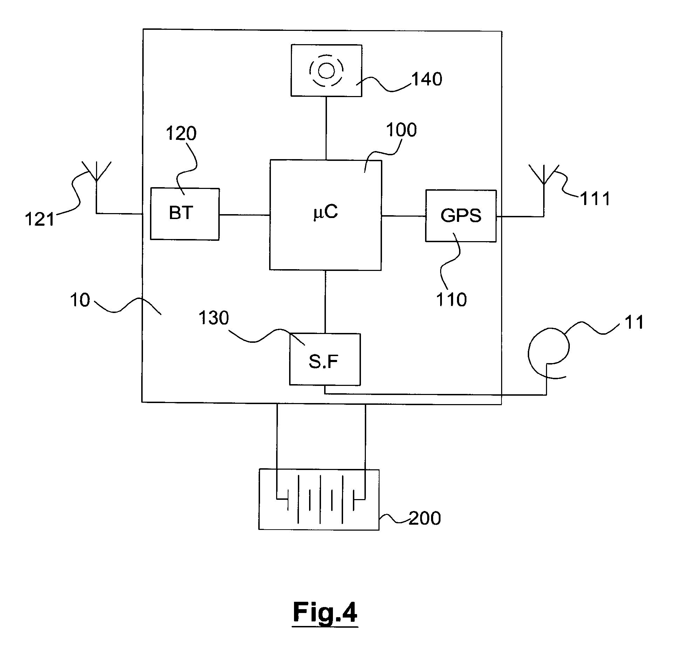

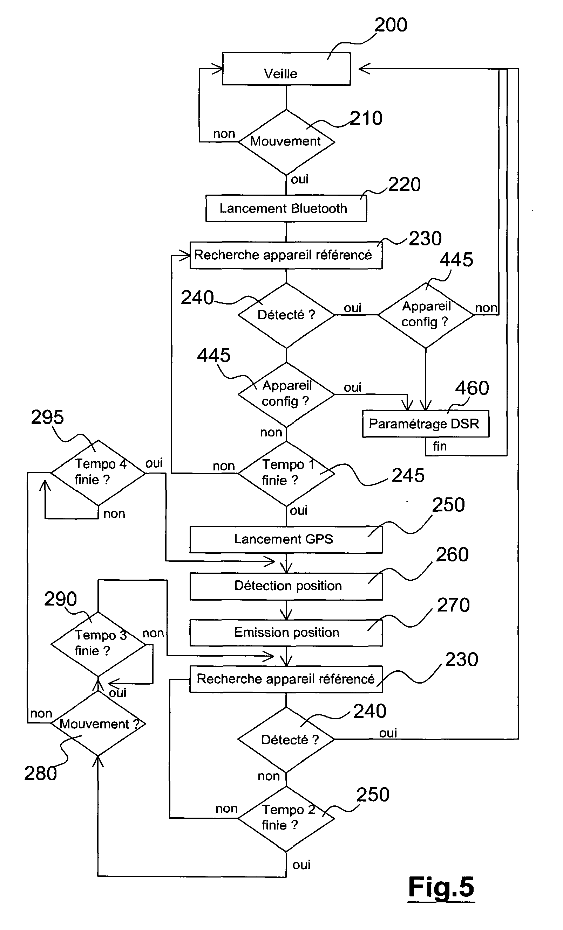

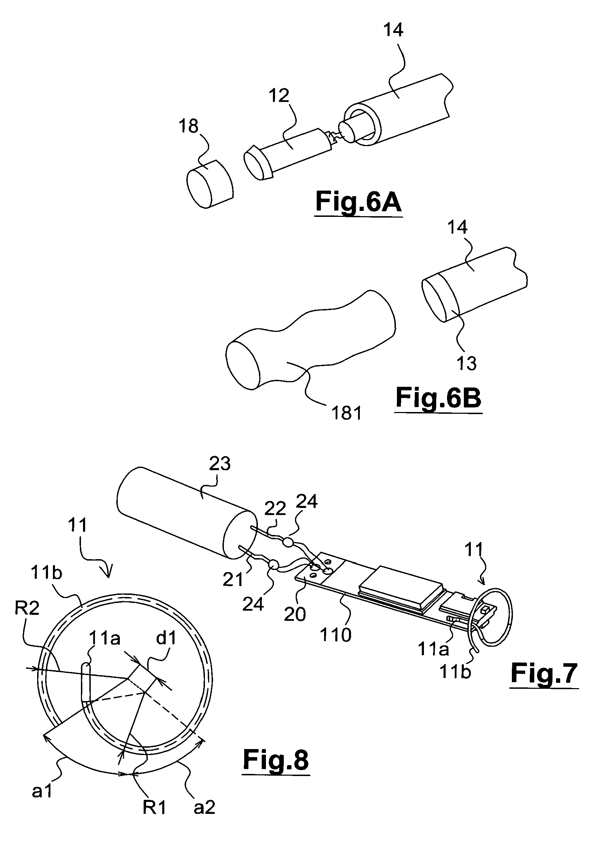

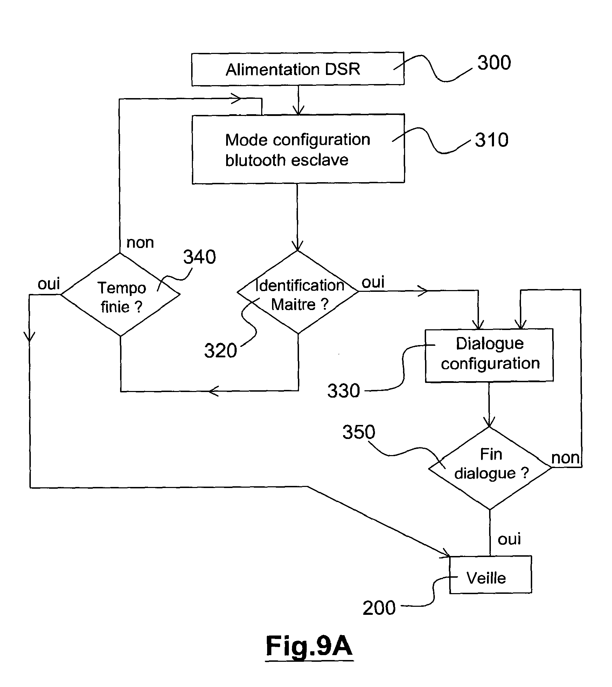

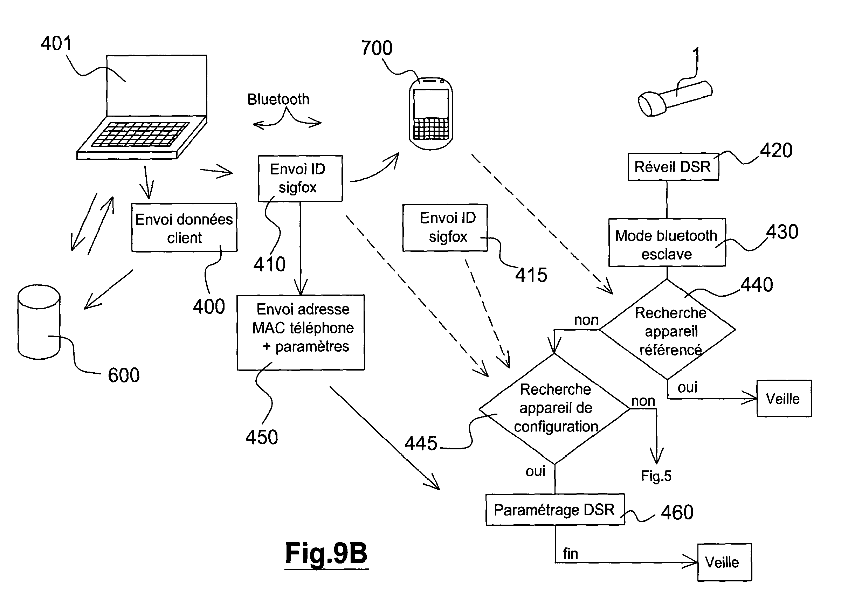

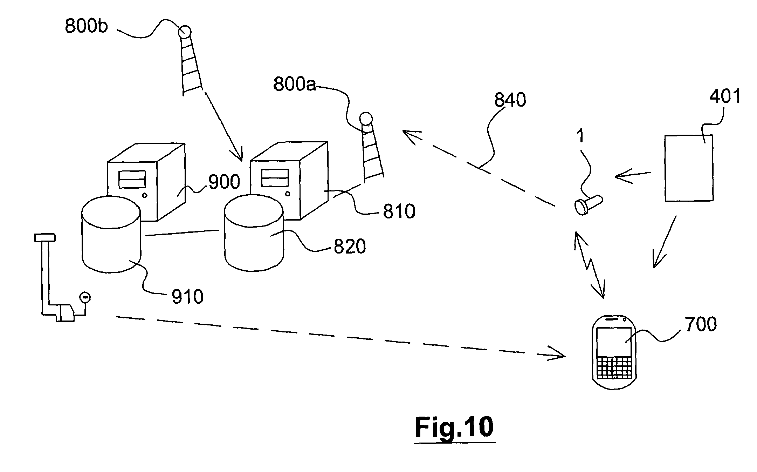

D'autres caractéristiques et avantages de l'invention seront apparents à la lecture de la description qui suit d'un exemple non limitatif de réalisation de l'invention en référence aux dessins qui représentent:
en figure 1 : une vue en perspective d'un dispositif de l'invention;
en figure 2: le dispositif de la figure 1 inséré dans un tube;
en figure 3: une vue en perspective du dispositif dans son enveloppe;
en figure 4: une représentation schématique du dispositif électronique de l'invention;
en figure 5: un organigramme d'une phase de fonctionnement générale du dispositif.
aux figures 6A et 6B: des vues en perspectives de détails de modes de réalisation de l'invention;
en figure 7: une vue en perspective d'un raccordement du dispositif de l'invention avec une pile d'alimentation;
en figure 8: une vue de face d'une antenne du dispositif de l'invention;
aux figures 9A et 9B:des organigrammes de phases d'initialisation et de mise en route du dispositif;
en figure 10: un schéma général d'un système selon l'invention.

### Description détaillée de modes de réalisation de l'invention

Le dispositif de suivi et de repérage (DSR) selon la figure 1 comprend un dispositif électronique 10 et une première antenne 11 qui dépasse d'une extrémité du dispositif électronique.

Le dispositif électronique 10 de suivi et de repérage comporte sur un circuit imprimé un bloc microcontrôleur basse consommation, un module de réception de géo-localisation, d'émission radio numérique bas débit de portée moyenne typiquement jusqu'à 10 à 50 km, un module accéléromètre, un module d'émission réception pour liaison radio numérique de proximité, reliés au et pilotés par le bloc microcontrôleur.

L'ensemble dispositif 10 et antenne 11 est moulé dans une enveloppe 12 constituée d'une résine. La figure 1 représente le dispositif électronique et la première antenne en transparence au travers de la résine qui peut bien entendu être opaque. L'enveloppe comprend un renflement 13 au niveau de la première antenne 11.

L'enveloppe 12 isole de manière étanche le dispositif électronique 10 qui comporte un circuit imprimé 110 portant des composants électroniques et notamment un module modem 10b et protège ce circuit imprimé des chocs. L'enveloppe 12 est globalement de conformation cylindrique d'un diamètre réduit par rapport au diamètre intérieur d'un élément 14 tel qu'un tube de guidon ou autre.

Le renflement 13 permet d'arrêter le dispositif lors de l'insertion de l'enveloppe dans un tube 14 comme représenté à la figure 2 représentation pour laquelle le bout du tube 14 est découpé pour visualiser l'enveloppe 12 et le renflement 13 en butée contre l'extrémité du tube.

Des joints toriques 15 sont disposés sur l'enveloppe pour faciliter un maintien de l'enveloppe 12 à l'intérieur de l'élément 14 et centrer l'enveloppe dans cet élément.

La figure 3 représente une vue en perspective du dispositif dans son enveloppe vue du côté opposé à l'antenne et permet de visualiser des entailles 16 de retenue et de positionnement des joints toriques 15 qui comme vu précédemment centrent l'enveloppe dans un tube, notamment un tube de guidon d'un véhicule deux roues. Le diamètre des joints toriques 15 est choisi en fonction du diamètre interne des tubes dans lesquels on souhaite loger le dispositif.

En effet, dans le cas d'un guidon par exemple, le tube cylindrique comporte un diamètre intérieur compris généralement entre 15,5 mm et 18,5 mm pour un guidon fin de type vélo de course et compris entre 18,5 mm et 21,5 mm dans le cas d'un tube de guidon épais par exemple un guidon de VTT. Le dispositif. noyé dans son enveloppe 12 en résine possède un diamètre est de l'ordre de 14,5 à 15,5 mm.

Le diamètre minimum de l'enveloppe est de 15,5 mm dans la réalisation actuelle pour laquelle ce diamètre est conditionné par le circuit imprimé enrobé.

Ce circuit possède une largeur de l'ordre de 14 mm du fait de la largeur du module d'émission/réception bas débit 10b actuellement disponible.

Pour le diamètre de tube de 15,5 le dispositif est inséré directement dans la partie droite inférieure terminant le guidon de type course. Pour les diamètres de tubes plus grands, des joints toriques de diamètre adapté permettent de centrer sans jeu le dispositif dans les tubes.

Avec un module de taille plus réduite, le dispositif enrobé pourrait être bien entendu plus petit.

La résine de l'enveloppe est selon l'exemple de réalisation une résine polyuréthane et le renflement autour de l'antenne 11 en forme de spire ouverte est de diamètre 22 mm avec une longueur de 7 mm.

La résine est un matériau diélectrique qui influe sur les propriété d'émission de l'antenne enrobée et les dimensions du renflement et la forme de l'antenne sont calculés pour favoriser l'émission au moyen de l'antenne à une fréquence compatible avec un réseau de communication bas débit sur une fréquence de 868 MHz ou 902 MHz en particulier.

L'antenne particulièrement représentée à la figure 7 comporte une queue de connexion 11a qui se soude sur le circuit imprimé 110 du dispositif 10.

La queue de connexion est perpendiculaire au plan dans lequel se développe la spire ouverte 11 b de l'antenne 11.

Selon la figure 8 l'antenne vue de face dans son plan comporte une première partie en arc de cercle d'un rayon R1 suivie d'une seconde partie en arc de cercle dont le centre est décalé d'une distance d1 ajoutée à R1 en fin de première partie et de rayon R2>R1. L'antenne 11 est une antenne à boucle (loop antenna en anglais).

Selon un mode de réalisation particulier R1=7,5 mm, R2=10 mm et d1=3 mm. Ces valeurs s'entendent avec une tolérance de l'ordre de 10% et le secteur couvert par le segment de spire de rayon R2 est de 250 à 260 degrés.

Cette antenne est particulièrement adaptée à être noyée dans la résine et se trouve à environ 0,5 à 1,5 mm de la surface de la résine ou affleurer la surface de la résine sur sa périphérie.

L'antenne présentée n'est pas limitée pour son usage au dispositif et peut être utilisée pour d'autres systèmes utilisant les mêmes caractéristiques radio.

La figure 4 représente schématiquement le dispositif électronique de l'invention. Ce dispositif comporte un bloc microcontrôleur basse consommation, bloc µC 100, avec ses périphériques mémoire, horloge qui ne sont pas détaillés car connus de l'homme du métier, un module d'émission bas débit SF 130 relié à la première antenne 11, un module accéléromètre 140, un module de réception de géo-localisation GPS 110 avec une deuxième antenne 111, en bord de carte inférieur en figure 1, un module d'émission réception pour liaison radio numérique de proximité BT 120 par exemple selon le standard Bluetooth et son antenne 121 qui se retrouve en bord supérieur de carte en figure 1

Le bloc microcontrôleur et les modules représentés le sont sans les composants discrets nécessaires à leur fonctionnement et connus de l'homme du métier.

L'ensemble est relié à une pile d'alimentation longue durée 200.

Le module d'émission bas débit SF 130 est notamment un module d'émission qui comporte un modem et un étage d'émission conformes aux spécifications d'un au réseau bas débit tel que le réseau déployé par la société française Sigfox adapté à une communication unidirectionnelle bas débit (100 bits/s) à bande ultra étroite (100 Hz) machine vers machine et pourvu de moyens de traitement du signal et de normes de réalisation de trames adaptés pour réduire les risques que des interférences perturbent la transmission des données. Un tel réseau définit en outre pour chaque module fabriqué un identifiant unique qui dans le cas présent va servir à identifier le cycle.

La technologie de ce réseau permet avec une faible puissance d'émission d'atteindre une portée de 30 à 40 kilomètres.

Le système de suivi et de repérage de véhicules comporte plusieurs niveaux.

Le premier niveau est le dispositif suivi et de repérage enrobé décrit plus haut.

Le deuxième niveau est le réseau bas débit et le serveur central de son opérateur. A ce niveau, des récepteurs bas débit reçoivent les données de relèvement et de localisation émise par les émetteurs bas débit 130 des dispositifs.

L'ensemble des données de tous les dispositifs basés sur la technologie de transmission bas débit sont reçues et dispatchées vers le prestataire ou utilisateur gérant les dispositifs.

Dans le cas présent, les données des dispositifs de suivi et de repérage sont transmises avec l'identifiant des dispositifs à un ou plusieurs serveurs du prestataire de surveillance qui va déterminer selon ses bases de données, les coordonnées des propriétaires des véhicules comportant les dispositifs qui émettent.

Le serveur du prestataire de surveillance va ainsi pouvoir prévenir par SMS ou mail au travers des réseaux internet ou GSM les propriétaires de véhicules volés ou égarés.

Le système de suivi et de repérage, agencé pour être aisément placé à l'intérieur d'un élément tel qu'une fourche ou préférentiellement un guidon dans le cas d'un cycle ou de toute autre partie du véhicule à protéger qui permet aux antennes d'émettre ou de recevoir.

De retour à la figure 4, le module d'émission réception Bluetooth BT 120 est lui même adapté à communiquer avec un appareil électronique tel qu'un téléphone portable, par exemple le téléphone portable comportant l'application adaptée à recevoir les données de localisation émises par le serveur décrit ci-dessus.

Ce choix est particulièrement intéressant du fait que des solutions NFC solutions de connexion sans contact ou RFID sont finalement des solutions onéreuses, consommatrices de courant, complexes à mettre en oeuvre et moins souples pour les applications à réaliser et l'usage client.

Le microcontrôleur est de type très basse consommation avec fonction de mise en veille profonde. Le dispositif est conçu pour qu'une détection de mouvement par l'accéléromètre puisse générer un signal de réveil pour le microcontrôleur qui rentre alors dans un programme décrit à la figure 5 et qui comporte une étape de veille 200 dont le système sort par une détection de mouvement 210. Cette sortie de veille provoque un lancement de la liaison Bluetooth selon l'étape 220 et une recherche d'un appareil client déjà enregistré (appareil référencé) sur le dispositif selon l'étape 230.

Si un appareil référencé est détecté au test 240, le système passe par un test 445 de recherche d'appareil de configuration et, après une éventuelle configuration 460 retourne en veille.

La recherche se fait pendant une temporisation 245 tempo 1 et si aucun appareil n'est détecté, ou de configuration selon le test 445, le dispositif passe en mode de suivi.

Un point intéressant de l'invention dans une telle mise en oeuvre est que la recherche d'un appareil déjà enregistré, basée sur le protocole de mise en communication dans lequel l'adresse MAC du dispositif à contacter est communiquée, n'est pas tributaire de l'existence sur ledit appareil d'un logiciel ou application de dialogue avec le dispositif 10 de l'invention.

Les adresses MAC de un ou plusieurs appareils sont stockés dans le dispositif dans une phase d'initialisation préalable discutée plus loin.

Une version plus sécurisée pourrait toutefois, outre la reconnaissance de l'adresse MAC de l'appareil référencé, demander l'échange d'un code connu des deux appareils avec cryptage ou non.

Le mode de suivi qui commence à l'étape 250 de la figure 5 utilise le récepteur de géo-localisation 110 muni de son antenne 111 comme représenté à la figure 4. Ce mode est mis en route dans le cas où le dispositif ne détecte pas d'appareil enregistré au niveau du test 240 de la figure 5.

Le mode de suivi comporte, une fois le module GPS en marche, le relevé de la position du véhicule, étape 260, l'émission de la position du véhicule et une nouvelle étape de recherche d'appareil enregistré 230, 240, 250 dans une boucle qui fonctionne selon une temporisation 290 tempo 3 tant que le véhicule est en mouvement, selon le test de mouvement 280.

Dans ce mode, le module GPS 110 relève la position du véhicule, étape 260 et la transmets par l'intermédiaire du microcontrôleur 100 au module d'émission 130 de la figure 4 selon la temporisation 290 (par exemple toutes les 10 mn ou toutes les demi heures).

Le microcontrôleur va encoder ces données, ajouter un numéro d'abonné et les émettre selon le protocole du réseau bas débit longue distance tel que le réseau Sigfox choisi de manière préférentielle.

Conformément au réseau choisi, ces données sont reçues sur des antennes réparties sur le territoire selon un maillage donné et sont transmises à un serveur qui va les retransmettre à l'abonné concerné.

Le mode de suivi se poursuit tant qu'un appareil référencé n'est pas détecté et les émissions sont réalisées selon des périodicités différentes selon que le dispositif détecte ou non un mouvement selon les temporisations 290 tempo3 et 295 tempo 4 et le test de mouvement 280.

Sur un plan technico-économique, utiliser une radio-émission bas débit telle que celle du système Sigfox présente de nombreux avantages par rapport à une liaison GSM.

A la base ces deux types de liaisons fonctionnent avec un abonnement.

Toutefois, en premier l'abonnement à un réseau bas débit est beaucoup moins cher qu'un abonnement GSM qui serait dans le cas présent sous utilisé.

Par ailleurs, la liaison bas débit peut être utilisée simplement de manière unidirectionnelle et à faible puissance ce qui diminue grandement les besoins du système en alimentation électrique, limite sa dissipation et la surface de circuit nécessaire à son implémentation et simplifie le protocole de communication.

L'émission unidirectionnelle est simple, les données sont émises et l'émetteur, qui n'attend ni établissement de communication ni réponse, peut être remis en veille dès l'émission terminée ce qui est particulièrement bénéfique pour la présente application. Le dispositif de la présente invention pour lequel le module bas débit peut être un module émetteur/récepteur peut toutefois utiliser pour certaines fonctions un mode de communication bidirectionnel par la liaison moyenne distance bas débit, par exemple pour désactiver ou activer un mode de surveillance à distance ou mettre le dispositif à jour.

Côté détection de l'appareil référencé, la liaison de type Bluetooth compatible avec l'ensemble des versions Bluetooth dont la version basse consommation "Bluetooth LE" est largement répandue et les composants sont particulièrement peu coûteux.

La mise en route et fonctionnement du dispositif de suivi et de repérage (ci-après DSR) est décrite ci-après.

Le DSR comporte de fabrication un identifiant unique du module radio connu dans une base de données du prestataire de surveillance qui commercialise le système. Il est livré non alimenté par le prestataire de surveillance à l'intégrateur vendeur du cycle (vendeur de véhicules tel qu'un vélociste par exemple).

L'initialisation du dispositif est décrit en référence à la figure 9A.

Lorsqu'il est mis sous tension 300, le DSR passe en mode configuration 310. Il active alors sa fonction Bluetooth en mode esclave c'est à dire qu'il diffuse un nom comportant l'identifiant unique du module SIGFOX et attend une connexion d'un autre appareil dans la boucle 320.

L'application maître dans un appareil tel qu'un ordinateur du vélociste réalise la connexion 330 et procède à la configuration de base du DSR notamment le format des trames à émettre sur la liaison bas débit, la mise en mémoire permanente des temporisations de base et tout autre paramètre de fonctionnement souhaité.

Au bout d'une temporisation 340 qui est par exemple fixée à 2mn, si aucune connexion n'a eu lieu, le dispositif se remet en veille 200.

De même en fin de configuration, une fois déconnecté 350 le DSR se remet en veille 200.

Selon la figure 9B, lorsqu'un client vient acheter le cycle équipé du DSR, en premier lieu le vélociste entre; par exemple au moyen d'une liaison internet, dans la base de données 600 du prestataire les données du client et les relie à l'identifiant unique du dispositif 10 du véhicule et au téléphone qui va devenir le premier appareil référencé au moyen de son application de configuration sur son appareil de configuration 400.

Le vendeur de véhicule (vélociste dans le cas d'un deux roues) lance ensuite en mode configuration son application de pilotage du DSR sur son appareil de configuration. L'application de configuration change dans un premier temps le nom de diffusion Bluetooth de l'ordinateur pour contenir l'identifiant SIGFOX à l'étape 410.

En secouant le cycle, le DSR se réveille à l'étape 420, ouvre sa liaison Bluetooth en mode esclave à l'étape 430 et recherche alors autour de lui les appareils Bluetooth référencés à l'étape 440 qui regroupe des étapes similaires aux étapes 230, 240, 245 de la figure 5.

Le DSR recherche ensuite les appareils de configuration à l'étape comportant la boucle 445.

Dans cette boucle le DSR recherche les appareil comportant son identifiant dans leur nom de diffusion Bluetooth ce qui lui permet de reconnaître l'ordinateur comportant l'application de configuration ayant changé le nom de diffusion Bluetooth de l'ordinateur à l'étape 410.

Une configuration du DSR peut aussi être faite avec le téléphone 700 à l'étape 415 si le téléphone est muni d'une application de configuration du DSR.

La connexion avec l'appareil de configuration pourvu de l'application de pilotage DSR fait passer le DSR en mode configuration, ou paramétrage DSR, 460.

Une fois le DSR entré dans le mode de configuration, il est possible par l'envoi de données à l'étape 450 de le paramétrer notamment pour reconnaitre l'adresse MAC du téléphone de l'acheteur et pour initialiser son code PIN.

La configuration peut être poursuivie ou ré-initiée avec une application (sur téléphone mobile ou ordinateur) après authentification et connexion au DSR .

Les phases de mise en fonction ci-dessus peuvent aussi être réalisées en une seule fois si le DSR est monté lors de l'achat du client ou monté en post équipement sur un véhicule.

Pour valider les échanges suivants, l'application de configuration devra via un protocole propriétaire envoyer le code PIN du DSR.

L'application de configuration peut rechercher des appareils Bluetooth aux alentours pour récupérer leurs adresses MAC ou récupérer l'adresse MAC de l'appareil sur lequel elle est active et l'enregistrer dans le DSR.

L'application peut paramétrer sur le DSR une durée de désactivation du DSR pour pouvoir déplacer le cycle (par exemple sur une remorque...) sans que le DSR ne passe en mode vol ou paramétrer un délai après lequel le DSR passera automatiquement en mode vol. Par exemple après une durée prédéfinie de location pour un loueur de cycles.

L'application peut enfin enregistrer tout une suite de paramétrage pour gérer les temporisations des alertes et les vitesses de déplacement du véhicule qui conditionnent des temporisations des envois de trame.

Description du fonctionnement du DSR:
- Le mode veille:
   Immobile le DSR se trouve en mode veille. Lorsque le véhicule ne bouge pas, le DSR attend un déplacement pour se réveiller.
- Le mode mouvement décrit plus haut en référence à la figure 5:
   Lorsque le DSR détecte un mouvement du véhicule, il tente de se connecter aux appareils enregistrés dans sa mémoire par exemple au moyen de l'interrogation des adresses MAC des appareils alentour. Si un appareil enregistré est identifié et que plus aucun mouvement n'est détecté le DSR repasse en mode veille.

Si un appareil enregistré est identifié mais que le DSR détecte un mouvement il se rendort pour par exemple 30 minutes puis retente le mode mouvement.

Si aucun appareil enregistré n'est identifié, le DSR lance une recherche d'appareils proches pour déterminer s'il doit passer en mode configuration. Si aucun appareil demandant de passer en mode configuration n'est détecté, le DSR passe en mode vol.
- Le mode vol:
   Le DSR met en route son GPS qui reste alors en mode tracking (recherche de position) de manière continue.

Le DSR envoie une première trame de surveillance. Cette trame reçue par l'opérateur du réseau bas débit est transmise au serveur du prestataire de surveillance qui envoie une première alerte par exemple par SMS et mail pour questionner l'utilisateur et l'avertir qu'un mouvement est détecté.

Une fois la trame envoyée, le DSR se rendort et attend la fin d'une temporisation adaptative pour se réactiver et ré-exécuter le mode mouvement.

Les fois suivantes:
A chaque alerte le DSR teste les adresses MAC pour savoir s'il doit repasser en mode veille.

La temporisation adaptative est définie selon une règle reliée à la vitesse du véhicule et permet de gérer les temporisations des alertes.

Si un changement d'état intervient c'est le dernier état qui prédomine.

Par exemple il est choisi de respecter les règles suivantes qui permettent de limiter les émissions dans des phases de mouvement rapide ou d'arrêt complet du véhicule pour réduire sa consommation dans ces phases où relever sa position n'est pas primordial. Si la vitesse du véhicule est nulle et qu'aucun mouvement n'est détecté le DSR n'émettra qu'une trame par jour. Si la vitesse est inférieure à 5 km/h, le DSR émettra une trame toutes les minutes. Si la vitesse est supérieure à 5km/h et inférieure à 20 km/h, le DSR émettra une trame toutes les 5 minutes.

Si la vitesse est supérieure à 20 km/h, le DSR émettra une trame toutes les 30 minutes.

Ces valeurs de temporisations ne sont bien entendu pas limitatives et peuvent être modifiées à tout moment.

Les trames sont des messages radio envoyées par la liaison radio bas débit contenant les informations relative à la localisation du véhicule, sa vitesse et la vie de la batterie.

En outre dans une version particulière, le dispositif comporte, pour chaque trame envoyée en émission portée moyenne, l'envoi par le même émetteur d'une trame locale à basse puissance interprétable par un récepteur local.

Ceci permet une localisation/information de proximité par un prestataire tel qu'un garage ou une fourrière dans lequel rentre un cycle équipé du DSR. Le prestataire pouvant par exemple dans le cas d'une fourrière être mis en contact avec le prestataire de surveillance et éventuellement être averti de l'identité du propriétaire du cycle.

Au plan mécanique et dans le cas d'une mise en place dans un guidon de cycle, le système de l'invention comprend selon la figure 6A un capuchon 18 qui est apte à obturer l'extrémité du tube 14. Le capuchon peut faire partie d'une poignée 181 couvrant l'extrémité du tube ou élément 14 comme représenté en figure 6B.

Selon la figure 7, le circuit imprimé 110 du dispositif 10 comprend une extrémité interne 20, opposée à son extrémité portant l'antenne 11, qui est équipée de fils de connexion 21, 22 à une source d'alimentation électrique 23. La source d'alimentation électrique 23 est néanmoins susceptible d'être intégrée au dispositif. La source d'alimentation électrique 23 comprend par exemple au moins une pile du type NiCd, NIMh, alcaline ou analogue. Une protection étanche des pôles de la source d'alimentation électrique 23 est réalisée soit par enduction locales des pôles par l'intermédiaire d'une colle thermo-fusible, une résine souple ou analogue, soit par une capsule similaire à l'enveloppe 12, soit par intégration de la source d'alimentation électrique 23 à l'intérieur de l'enveloppe 12. La source d'alimentation électrique 23 est reliée au circuit imprimé par l'intermédiaire de connecteurs 24 de type quelconque connu.

Ces dispositions sont telles que le système de suivi et de repérage de la présente Invention est apte à émettre un signal permettant la localisation du véhicule sur lequel le système de suivi et de repérage est implanté, une telle localisation permettant au propriétaire du véhicule de retrouver ce dernier en cas de vol ou d'égarement ou, dans le cas d'une flotte de véhicules, d'assurer un suivi de leur position avec des moyens simples à mettre en oeuvre, l'appareil appairé au dispositif étant dans ce cas par exemple une borne de location ou une borne d'un lieu de stockage des véhicules.

La figure 10 résume le système vu ci-dessus. Le système comporte principalement le dispositif de suivi et de repérage 1, l'appareil de configuration 401, une application dans un terminal client 700 smartphone (téléphone intelligent) en particulier, un serveur 900 de l'opérateur de suivi.

Un dispositif de suivi et de repérage 1 envoie par radio 840 vers un récepteur 800a du réseau bas débit géré par un ou plusieurs serveurs 810 qui décode le signal et reconnaît par sa base de données 820 l'opérateur du dispositif 1. L'information est transmise à un serveur 900 de l'opérateur du dispositif 1 et le client possesseur du véhicule est reconnu au moyen de la base de données 910. Une fois le client reconnu, le serveur 900 transmet les informations par GSM ou autre à l'application sur le terminal 700 du client qui peut ainsi retrouver son véhicule.

Le dispositif de l'invention de part sa taille et sa faible consommation permises par les solutions choisies est parfaitement adapté à un véhicule deux roues tel que vélo ou scooter mais peut être utilisé pour d'autres véhicules.

Il a été choisi de disposer l'alimentation du dispositif à l'extérieur de l'enveloppe pour une question de simplicité de réalisation et de positionnement dans un guidon courbe toutefois dans le cas où l'appareil est disposé ailleurs ou dans le cas où l'appareil est utilisé pour un autre type de véhicule, il peut être envisagé d'utiliser une batterie rechargée par le circuit électrique du véhicule si ce dernier en est pourvu et/ou de disposer la batterie ou pile dans l'enveloppe.

## Revendications

1. - Dispositif de suivi et de repérage (10) comportant un bloc microcontrôleur basse consommation (100) et un module de réception de géo-localisation (110), **caractérisé en ce qu'**il comprend un module d'émission radio numérique bas débit (130) de portée moyenne typiquement jusqu'à 10 à 50 km, un module accéléromètre (140), un module d'émission réception pour liaison radio numérique de proximité (120) lesdits modules étant reliés au et pilotés par le bloc microcontrôleur.

2. - Dispositif de suivi et de repérage selon la revendication 1 pour lequel le module d'émission-réception pour liaison radio numérique de proximité (120) est réalisé selon le standard Bluetooth.

3. - Dispositif de suivi et de repérage selon la revendication 1 ou 2 pour lequel le module d'émission bas débit (130) est adapté à une communication bas débit (100 bits/s) à bande ultra étroite (100 Hz).

4. - Dispositif de suivi et de repérage selon la revendication 3 pour lequel le module d'émission bas débit (130) est un module d'émission réalisé selon le standard du réseau bas débit Sigfox.

5. - Dispositif de suivi et de repérage selon l'une quelconque des revendications 1 à 4 pour lequel le module d'émission réception de proximité (120) est adapté à communiquer avec un appareil électronique tel qu'un téléphone portable.

6. - Dispositif de suivi et de repérage selon l'une quelconque des revendications 1 à 4 pour lequel le dispositif comporte une fonction de mise en veille du microcontrôleur et des modules et pour lequel le câblage de l'accéléromètre avec le microcontrôleur est conçu pour qu'une détection de mouvement par l'accéléromètre génère un signal de réveil pour le microcontrôleur qui rentre alors dans un programme de surveillance.

7. - Dispositif de suivi et de repérage selon l'une quelconque des revendications précédentes comportant des moyens de stockage de codes et/ou adresse MAC de un ou plusieurs appareils.

8. - Système de suivi et de repérage d'un véhicule comportant un dispositif de suivi et de repérage selon l'une quelconque des revendications précédentes et comportant en outre un logiciel d'appairage et de dialogue avec ledit dispositif sur un appareil portable.

9. - Système de suivi et de repérage d'un véhicule selon la revendication 8 comportant au moins un récepteur bas débit relié avec un serveur pourvu d'une base de données utilisateur et de moyens de dialogue avec une application de localisation hébergée sur ledit appareil portable ou un autre appareil.

10. - Procédé de mise en oeuvre d'un dispositif (10) selon l'une quelconque des revendications 1 à 7 comportant une étape de sortie de veille du dispositif sur détection de mouvement (210), un lancement d'une liaison Bluetooth (220) et une recherche d'un appareil référencé (230).

11. - Procédé selon la revendication 10 comportant une étape (240) de détection et de reconnaissance de l'appareil par dialogue avec l'appareil et une étape de retour dans l'état de veille (200) sur reconnaissance de la présence de l'appareil.

12. - Procédé selon la revendication 11 pour lequel l'étape de détection et de reconnaissance de l'appareil comporte la prise en compte de l'adresse MAC de l'appareil.

13. - Procédé selon l'une quelconque des revendications 10 à 12, comportant sur détection de l'absence d'un appareil référencé et après une temporisation donnée, une mise en route (250) du récepteur de géo-localisation (110).

14. - Procédé selon la revendication 13 comportant un test de mouvement du véhicule (290) et, tant que le véhicule est en mouvement, une ou plusieurs étapes (260) de relevé de position du véhicule au moyen du module GPS (110) et une ou plusieurs étapes (270) d'émission des relevés de position encodés selon le protocole du réseau bas débit unidirectionnel par le module d'émission SF (130).

15. - Procédé selon la revendication 14 comportant une ou plusieurs étapes de réception des relevés de positions sur des antennes réparties sur le territoire selon un maillage donné, une ou plusieurs étapes de transmission desdites données à un serveur et une ou plusieurs étape de transmission des relevés depuis le serveur distant vers un terminal utilisateur.

16. - Procédé selon l'une quelconque des revendications 10 à 15 comportant une étape de mise en route du dispositif de suivi et de repérage comportant un passage en mode configuration (310) du dispositif comportant une activation de sa fonction Bluetooth en mode esclave, la connexion de l'appareil avec une application de configuration (400) dans un appareil tel qu'un ordinateur (401) et la configuration de base dudit dispositif par l'application de configuration.

17. - Procédé selon la revendication 6 comportant une étape de personnalisation du dispositif comportant une étape d'entrée, dans la base de données (600) d'un prestataire gérant le dispositif, des données d'un client, une étape de paramétrage du dispositif (1) pour reconnaitre un terminal du client et initialiser un code secret du dispositif (1).
